# EUROPEAN PATENT APPLICATION

(11) **EP 4 678 268 A1**
(43) Date of publication of application: **14.01.2026**
(21) Application number: 24187336.3
(22) Date of filing: 09.07.2024
(51) Int. Cl.: B01D 46/00, B01D 46/24, B01D 63/06, H01M 8/04119, B01D 63/14, B01D 65/00

(54) **MEMBRANE ELEMENT FOR HUMIDIFIER AND HUMIDIFIER**

(71) Applicant: MANN+HUMMEL GmbH, 71636 Ludwigsburg (DE)
(72) Inventor: JAINEK, Herbert, 71636 Ludwigsburg (DE)
(74) Representative: Mann + Hummel Intellectual Property

(57) **Abstract**

A membrane element (10) for a humidifier (100), in particular for a fuel cell system, includes a membrane media bellows (12) being zigzag-pleated and comprising a membrane media, the membrane media bellows (12) extending at least partially in a circumferential direction about a longitudinal axis (14), the membrane media bellows (12) further comprising pleats (16) extending essentially parallel to the longitudinal axis (14), and the membrane media bellows (12) further comprising inner pleat folds (20) at an inner circumference (18) and outer pleat folds (24) at an outer circumference (22), a support body (40) comprising an outer wall (42) arranged at the inner circumference (18) of the membrane media bellows (12), and a bypass valve (30) for selectively blocking and unblocking a fluid passage (38) through the support body (40).

## Description

### Technical Field

Embodiments relate to a membrane element for a humidifier, in particular for a fuel cell system, as well as a humidifier for a fuel cell system.

### Background Art

Humidifiers known in the art are used for example to humidify process gas for fuel cells which are operated with molecular hydrogen and/or oxygen or air for electricity generation. The process gases supplied to the fuel cell are for this reason usually set to a desired, stable humidity in a humidifier. A humidifier usually comprises flow plates which are provided with channel structures, wherein the channels adjoin a water transfer medium, typically in the form of a semipermeable layer such as a water-transfer membrane. An assembly usually provides a plurality of flow plates, between which there are arranged water transfer membranes.

For example, on one side of a semipermeable layer a moist gas, e.g., an exhaust gas from the fuel cell, is guided through the channels of an adjacent flow plate, and on the opposite side of the semipermeable layer a dry gas, e.g., fresh air, is passed through channels of a second flow plate. In this case, the moist gas on one side of the semipermeable layer releases moisture to the semipermeable layer, while on the opposite side the semipermeable layer releases moisture to the dry gas.

### Summary

It is an object of the embodiments to provide an improved membrane element for a humidifier, in particular for a fuel cell system.

Another object is to provide an improved humidifier for a fuel cell system with such a membrane element.

According to an aspect of the embodiments the object is achieved by a membrane element for a humidifier, in particular for a fuel cell system, the membrane element comprising a membrane media bellows being zigzag-pleated and comprising a membrane media, the membrane media bellows extending at least partially in a circumferential direction about a longitudinal axis, the membrane media bellows further comprising pleats essentially parallel to the longitudinal axis, and the membrane media bellows further comprising inner pleat folds at an inner circumference and outer pleat folds at an outer circumference. The membrane element further comprises a support body comprising an outer wall arranged at the inner circumference of the membrane media bellows, the support body further comprising a support body inlet at one end and a support body outlet at an opposing end, the outer wall of the support body comprising fluid-permeable passages arranged circumferentially through the outer wall at each end of the support body. The membrane element further comprises a bypass valve for selectively blocking and unblocking a fluid passage through the support body.

According to another aspect of the embodiments the further object is achieved by a humidifier for a fuel cell system, the humidifier comprising a housing comprising an inlet for a first fluid, in particular a supply air of the fuel cell system, an inlet for a second fluid, in particular an exhaust gas of the fuel cell system, an outlet for the first fluid and an outlet for the second fluid. The humidifier further comprises the membrane element described above, the membrane element being arranged inside the housing, at least parts of the outer circumference of the membrane media bellows being fluidly connected to the inlet for the second fluid and the outlet for the second fluid, the support body inlet being fluidly connected to the inlet for the first fluid, and the support body outlet being fluidly connected to the outlet for the first fluid. The humidifier further comprises an actuator connected to the bypass valve and for activating the bypass valve depending on at least one operating parameter of the humidifier.

Advantageous embodiments are described in the dependent claims, the description and the drawings.

The proposed membrane element for a humidifier, in particular for a fuel cell system, enables optimizing a degree of efficiency of the fuel system. It favors a round design of the membrane element with folded membrane and applied folds. Application in a humidifier comprises diffusion of a moist medium from one side of the membrane to the other side. Moisture is diffusing through the membrane but not the gases.

The pleats of the membrane media bellows may be bent in crescent-shape manner in order to minimize the leakage path along the pleat folds or tips. Thus, a space-saving compact design of a humidifier is enabled.

Grid layers of the membrane media separated by the membrane may serve for ensuring a certain distance between different membranes in order to separate moist and dry gas flows and to enable an efficient moisture transfer through the membrane. Instead of grid layers, which can be of different quality, it is also conceivable to apply spacer beads to the membrane or to pleat the membrane.

Despite the additional function of the grid layers, support grids are possible which generate turbulence in order to achieve an optimum water exchange. Instead of support grids as grid layers, individual prefabricated plates could also be placed between the pleats of the membrane media.

The support body exhibits a hollow body. A bypass valve is integrated into the support body, which reduces or limits the pressure loss in the event of excess humidity and directs the first fluid, e.g., the dry supply air, through the interior of the supply body past the humidifier stack. Advantageously, this enables a significant reduction in pressure loss, especially as the humidifier only needs to be switched on at certain operating points.

The bypass valve may work in a standard spring-loaded manner, but could also be controlled externally to activate the humidifier only in certain operating states. A valve body of the bypass valve may be connected to an external actuator which may be configured for activating the bypass valve depending on at least one operating parameter of the humidifier. The actuator, e.g., may be arranged in a housing of the humidifier.

The valve body may be designed with a cone-shaped diffusor to optimize the flow of the first fluid for the distribution function in the humidifier. An outlet opening may be provided on the outflow side.

According to a favorable embodiment of the membrane element, the bypass valve may be arranged between the fluid-permeable passages of the support body. Thus, in an open state of the bypass valve, the first fluid, e.g., the dry supply air, does not enter through the passages but instead bypasses the membrane area minimizing moisture transfer from the wet exhaust gas to the dry supply air.

According to a favorable embodiment of the membrane element, the bypass valve may comprise a valve body and a valve seat arranged at an inside of the outer wall surrounding an inner opening of the support body. Thus, in a closed state of the bypass valve the fluid passage through the interior of the support body may be effectively blocked.

According to a favorable embodiment of the membrane element, the bypass valve may further comprise a spring element for preloading the valve body. The support body may further comprise abutments arranged at the support body and supporting the spring element. Advantageously, in a non-activated state of the bypass valve the valve body remains on the valve seat thus closing the fluid passage. The humidifier operates in a normal state transferring moisture from the wet exhaust gas to the dry supply air.

According to a favorable embodiment of the membrane element, the valve body may be rotatable about an axis transverse to the longitudinal axis. In an alternative embodiment the valve body may be rotated from a closed state position to an open state position, e.g., driven by an external actuator.

According to a favorable embodiment of the membrane element, the valve body may comprise a diffusor pointing towards an intended upstream side of the support body along the longitudinal axis. The diffusor may be cone-shaped in order to optimize the flow of the first fluid for the distribution function in the humidifier. By this way, the wet gas may be directed in an advantageous manner to the fluid-permeable passages in the outer wall of the support body.

According to a favorable embodiment of the membrane element, the membrane element may further comprise a fluid-tight sleeve and/or by a fluid-tight sealing material covering the outer circumference of the membrane media bellows at least partly along an axial extension of the membrane media bellows. Advantageously, a forced gas flow through pleats on the outer circumference of the membrane media bellows for favorable moist transfer to the dry gas may be achieved. As a fluid-tight sealing material, e.g., a thread wrap, a plastic tape, or a hot melt may advantageously be used.

According to a favorable embodiment of the membrane element, with the membrane element may further comprise end bodies, in particular end caps, closing the membrane media bellows at axial ends in a fluid-tight manner. By this way, the axial ends of the membrane media bellows may be sealed in an advantageous manner. Despite, the membrane media bellows is mechanically stabilized for handling during storing, mounting and demounting processes.

The proposed humidifier, in particular for a fuel cell system, enables optimizing a degree of efficiency of the fuel system. It favors a round design of the membrane element with folded membrane and applied folds. Diffusion of a moist medium from one side of the membrane to the other side is favorably possible. Moisture is diffusing through the membrane but not the gases.

The pleats of the membrane media bellows may be bent in crescent-shape manner in order to minimize the leakage path along the pleat folds or tips. Thus, a space-saving compact design of a humidifier is enabled.

Grid layers of the membrane media separated by the membrane may serve for ensuring a certain distance between different membranes in order to separate moist and dry gas flows and to enable an efficient moisture transfer through the membrane. Instead of grid layers, which can be of different quality, it is also conceivable to apply spacer beads to the membrane or to pleat the membrane.

Despite, support grids are possible which generate turbulence in order to achieve an optimum water exchange. Instead of support grids as grid layers, individual prefabricated plates could also be placed between the pleats of the membrane media.

The support body of the membrane element exhibits a hollow body. A bypass valve is integrated into the support body, which reduces the pressure loss in the event of excess humidity and directs the first fluid, e.g., the dry supply air, through the interior of the supply body past the humidifier stack. Advantageously, this enables a significant reduction in pressure loss, especially as the humidifier only needs to be switched on at certain operating points.

The bypass valve may work in a standard spring-loaded manner, but could also be controlled externally to activate the humidifier only in certain operating states. A valve body of the bypass valve may be connected to an external actuator which may be configured for activating the bypass valve depending on at least one operating parameter of the humidifier.

The actuator of the bypass valve, e.g., may be arranged in the housing of the humidifier. Different kinds of actuators are possible. The actuator may be a thermostat, e.g., with an electrically heated spring element, and the actuator may turn on the humidifier at higher temperatures. Bimetal actuators are thinkable, as well as shape memory alloys driven actuators, e.g., in the form of a spiral spring element. Activating the bypass valve may be achieved by gear racks, e.g., combined with a dovetail guide or the like.

The valve body may be designed with a cone-shaped diffusor to optimize the flow of the first fluid for the distribution function in the humidifier. An outlet opening may be provided on the outflow side.

According to a favorable embodiment of the humidifier, the humidifier may further comprise a water separator connected to the inlet for the second fluid and comprising a cyclone, a radial water separation chamber and a water outlet. Thus, an optional standard water separator may be connected to the second fluid, the wet exhaust gas, for removal of excessive water in the gas. This may be favorable if the exhaust gas is loaded with too much moisture.

According to a favorable embodiment of the humidifier, the humidifier may further comprise a circumferential sealing element at the outer circumference of the membrane media bellows and for sealing at least part of the outer circumference against a housing wall of the housing. Thus, a gas flow for advantageous moist transfer to the dry gas may be achieved.

According to a favorable embodiment of the humidifier, the humidifier may further comprise potting material arranged at a front side inside the housing and for sealing one axial end of the membrane media bellows. The membrane media bellows may be connected to the housing at the one axial end by the potting material, whereas another axial end of the membrane media bellows may be sealed by a housing cover of the housing. By this way, the membrane media bellows may be mounted directly to the humidifier housing and sealed against the housing. Thus, no additional sealing elements are necessary to control the intended gas flow for advantageous moist transfer to the dry gas.

According to a favorable embodiment of the humidifier, any one or any combination of the inlet for the second fluid and the outlet for the second fluid may comprise a diffusor. By this way, the dry gas may be directed for advantageous entry between the pleats on the outer circumference of the membrane media bellows.

### Brief Description of Drawings

The embodiments together with the above-mentioned and other objects and advantages may best be understood from the following detailed description of the embodiments, but not restricted to the embodiments.
Fig. 1 is a sectional view of a humidifier for a fuel cell system according to the embodiments with a bypass valve in a closed state.
Fig. 2 is the humidifier according to Fig. 1 with the bypass valve in an open state.
Fig. 3 is a sectional view of a humidifier for a fuel cell system according to other embodiments with a bypass valve in a closed state.
Fig. 4 is the humidifier according to Fig. 3 with the bypass valve in an open state.

### Description of Embodiments

In the drawings, like elements are referred to with equal reference numerals. The drawings are merely schematic representations, not intended to portray specific parameters of the embodiments. Moreover, the drawings are intended to depict only typical embodiments and therefore should not be considered as limiting the scope of the embodiments.

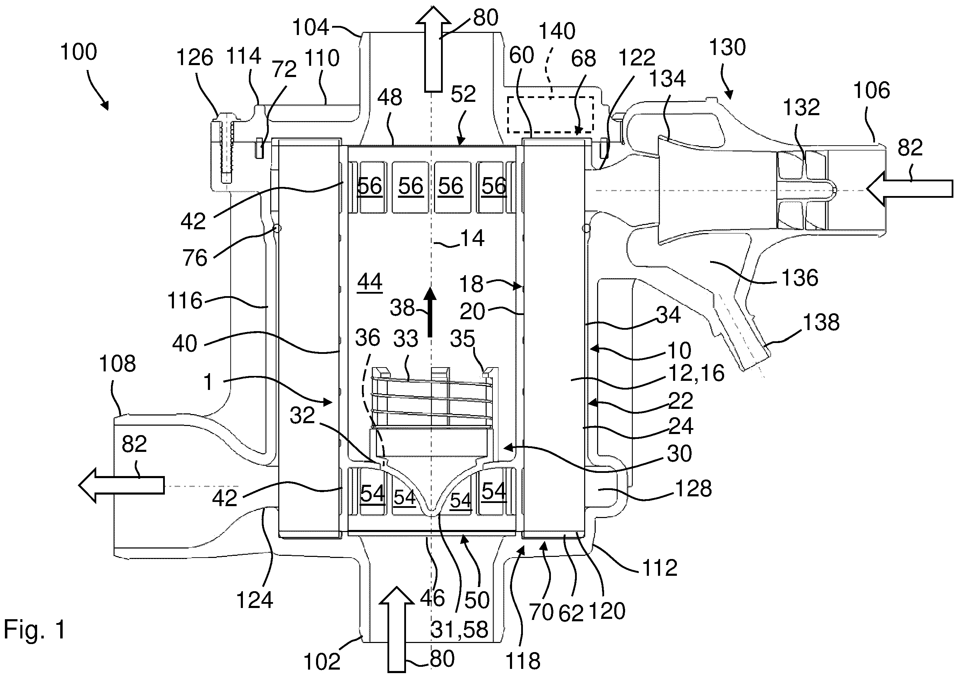

Fig. 1 depicts a sectional view of a humidifier 100 for a fuel cell system according to the embodiments with a bypass valve 30 in a closed state 1.

The humidifier 100 comprises a housing 110 with at least one inlet 102 for a first fluid 80, in particular a supply air of the fuel cell system, an inlet 106 for a second fluid 82, in particular an exhaust gas of the fuel cell system, an outlet 104 for the first fluid 80 and an outlet 108 for the second fluid 82. The housing 110 comprises a pot-like housing body 112, which is closed by a housing cover 114 and sealed by the circumferential sealing element 72. The housing cover 114 is connected to the housing body 112 with various locking bolts 126.

A membrane element 10 is arranged inside the housing 110. The membrane element 10 comprises a zigzag-pleated membrane media bellows 12 with a membrane media. The membrane media bellows 12 extends at least partially in a circumferential direction about a longitudinal axis 14. Pleats 16 of the membrane media bellows 12 extend essentially parallel to the longitudinal axis 14. The membrane media bellows 12 comprises inner pleat folds 20 at an inner circumference 18 and outer pleat folds 24 at an outer circumference 22.

A support body 40 with an outer wall 42 is arranged at the inner circumference 18 of the membrane media bellows 12. The support body 40 comprises a support body inlet 46 at one end 50 and a support body outlet 48 at the opposing end 52. Fluid-permeable passages 54, 56 are arranged circumferentially in the outer wall 42 at each end 50, 52 of the support body 40 being fluidly connected to the support body inlet 46 and the support body outlet 48.

At least parts of an outer circumference 22 of a membrane media bellows 12 are fluidly connected to the inlet 106 for the second fluid 82 and the outlet 108 for the second fluid 82. The support body inlet 46 is fluidly connected to the inlet 102 for the first fluid 80 and the support body outlet 48 is fluidly connected to the outlet 104 for the first fluid 80.

The membrane element 10 comprises a bypass valve 30 for selectively blocking or unblocking a fluid passage 38 through the support body 40. The fluid passage 38 is indicated by an arrow. The arrow also indicates the direction of the fluid flow when the bypass valve 30 is open and the fluid bypasses the membrane element 10.

The humidifier 100 comprises an actuator 140 connected to the bypass valve 30 for activating the bypass valve 30 depending on at least one operating parameter of the humidifier 100. The actuator 140 may be arranged in the housing cover 114 as shown in the embodiment. The connection between the actuator 140 and the bypass valve 30 is not shown in the Figs.

The bypass valve 30 is arranged between the fluid-permeable passages 54, 56 of the support body 40. A valve seat 32 of the valve body 31 is arranged at an inside of the outer wall 42 surrounding an inner opening 36 of the support body 40.

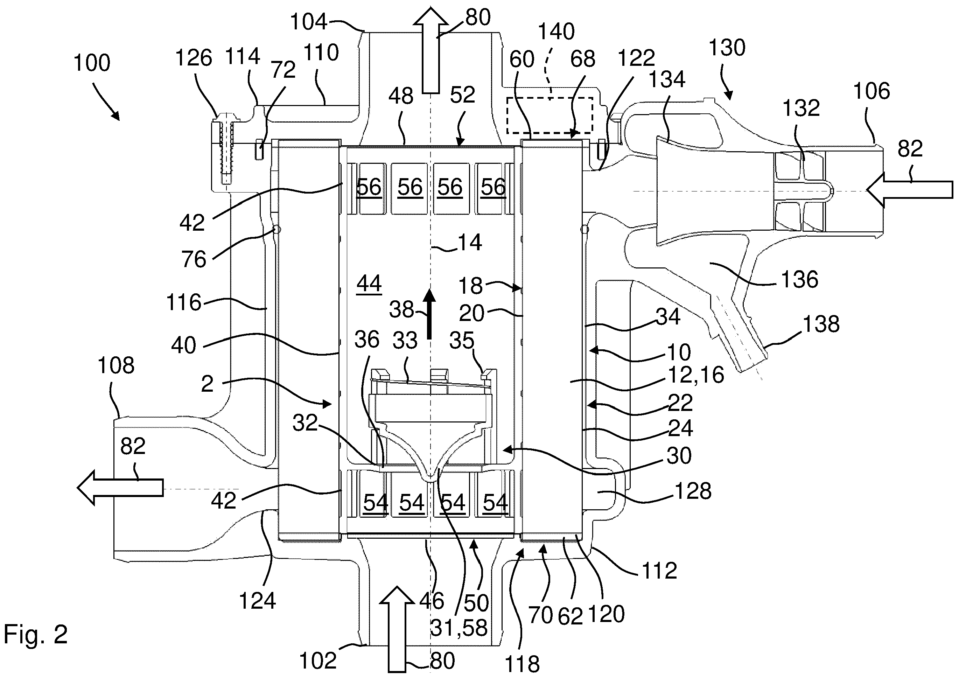

In the embodiment shown in Figs. 1 and 2, a spring element 33 is provided for preloading the valve body 31. The spring element 33 is supported at the support body 40, in particular at abutments 35 arranged at the support body 40. In the closed state 1 of the bypass valve 30, shown in Fig. 1, the valve body 31 is pressed by the spring element 33 against the valve seat 32 thus blocking the fluid passage 38 through the interior 44 of the support body 40.

The valve body 31 comprises a diffusor 58 pointing towards an intended upstream side of the support body 40 along the longitudinal axis 14. Thus a flow of the inflowing first fluid, in particular the dry supply air, is directed by the diffusor 58 into the passages 54 of the support body 40.

The inlet 106 for the second fluid 82 comprises an optional water separator 130. The water separator 130 is configured with a cyclone 132, comprising a diffusor 134 for expansion of the second fluid 82 and a radial water separation chamber 136 for collecting the separated water with a water outlet 138 for removing the separated water from the humidifier 100. The water separator 130 may be favorable if the exhaust gas is loaded with too much moisture.

In an alternative embodiment (not shown) the first fluid 80, in particular the dry supply air, could be fed to the second inlet 106 and exit the housing through the second outlet 108, whereas the second fluid 82, in particular the wet exhaust gas, could be fed to the first inlet 102 and exit through the first outlet 104. In such an embodiment the water separator 130 would also be connected to the first inlet 102.

The membrane media bellows 12 is provided with end bodies 60, 62, in particular end caps, closing the membrane media bellows 12 at axial ends 68, 70 in a fluid-tight manner.

At least one axial end 70 of the membrane media bellows 12 is sealed by potting material 120 arranged at a front side 118 inside the housing 110. In particular, the membrane media bellows 12 is connected to the housing 110 at one axial end 70 by the potting material 120, whereas the other axial end 68 is sealed by a housing cover 114 of the housing 110.

The outer circumference 22 of the membrane media bellows 12 is covered at least partly along the axial extension of the membrane media bellows 12 by a fluid-tight sleeve 34 and/or by a fluid-tight sealing material.

Part of the outer circumference 22 of the membrane media bellows 12 is sealed against the housing wall 116 of the housing 110 by at the circumferential sealing element 76 at the outer circumference 22.

Thus, the second fluid 82, in particular, wet exhaust gas, may enter the membrane element 10 from the outer circumference 22 at a height corresponding to the passages 56 on the inner circumference 18. The second fluid 82 is guided on the outer circumference 22 downwards thus transferring moisture through the membrane media bellows 12. The second fluid 82 exits the membrane media bellows 12 at the lower end into the ring channel 128 and streams out of the housing 110 of the humidifier 100 through the outlet 108.

The inlet 106 for the second fluid 82 and the outlet 108 for the second fluid 82 may be configured with a diffusor 122, 124 for favorable fluid flow. Alternatively, the inlet 106 may be configured with a nozzle.

In Fig. 2 the humidifier 100 is depicted with the bypass valve 30 in an open state 2.

The spring element 33 is pressed against the abutments 35. The valve body 31 is lifted from the valve seat 32 thus opening the fluid passage 38 for the first fluid 80 streaming through the interior 44 of the support body 40. With the bypass valve 30 in the open state 2 most of the first fluid 80, the dry supply air, does not enter through the passages 54 into the membrane media bellows 12 to get moisture from the second fluid 82, the wet exhaust gas, but bypasses the membrane media bellows 12 and exits the humidifier 100 through the outlet 104.

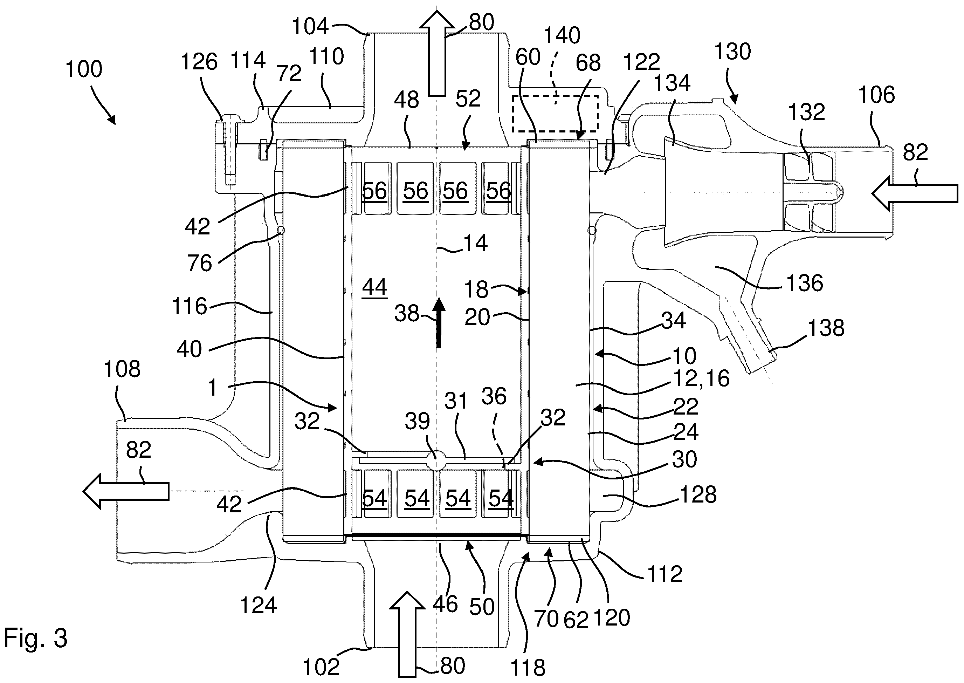

In Fig. 3 a sectional view of a humidifier 100 for a fuel cell system according to other embodiments with a bypass valve 30 in a closed state 1 is depicted.

Here, most features of the humidifier 100 and the membrane element 10 are the same as in the embodiment shown in Figs. 1 and 2. Therefore description will not be repeated.

The main difference is that the valve body 31 is configured to be rotatable about an axis 39 transverse to the longitudinal axis 14. The bypass valve 30 thus resembles a butterfly valve. The rotational motion of the bypass valve 30 may, e.g., be activated by the actuator 140 arranged in the housing cover 114. Yet other possibilities for activating the bypass valve 30 may also be favorable.

In Fig. 3 the valve body 31 is located in the valve seat 32 thus closing the fluid passage 38 through the interior 44 of the support body 40.

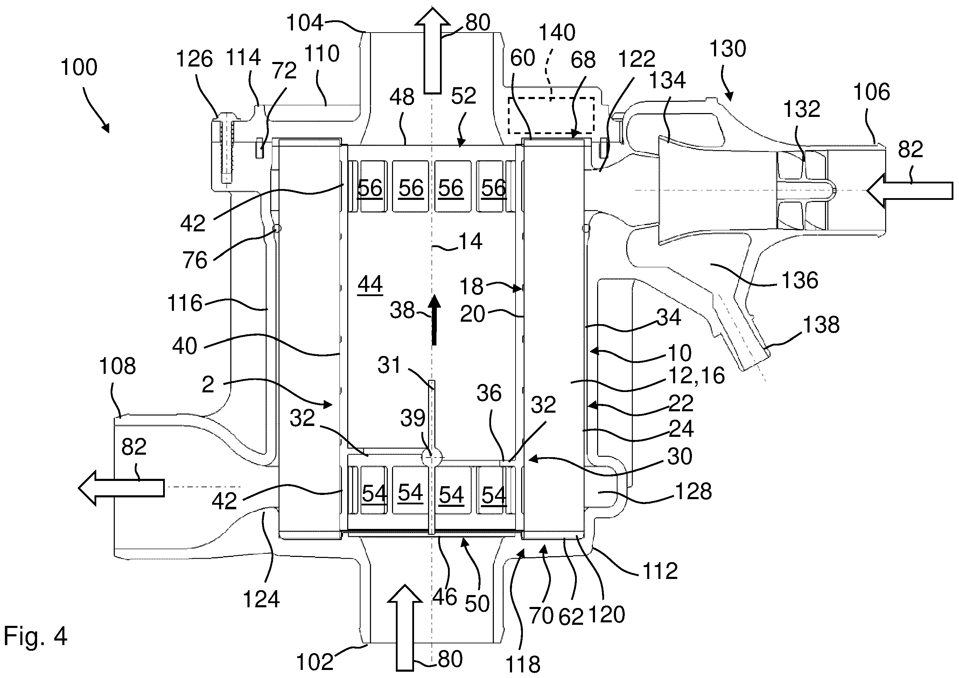

Fig. 4 depicts the humidifier 100 with the bypass valve 30 in an open state 2.

The valve body 31 is rotated in an upright position thus opening the fluid passage 38 for the first fluid 80 streaming through the interior 44 of the support body 40.

The second embodiment of the humidifier 100 depicted in Figs. 3 and 4 comprises a water separator 130 in the same way as the first embodiment depicted in Figs. 1 and 2.

### Reference Signs List

- 1: closed state
- 2: open state
- 10: membrane element
- 12: membrane media bellows
- 14: longitudinal axis
- 16: pleat
- 18: inner circumference
- 20: inner pleat fold
- 22: outer circumference
- 24: outer pleat fold
- 30: bypass valve
- 31: valve element
- 32: valve seat
- 33: spring element
- 34: sleeve
- 35: abutment
- 36: opening
- 38: passage
- 39: axis
- 40: support body
- 42: outer wall
- 44: interior
- 46: support body inlet
- 48: support body outlet
- 50: end
- 52: end
- 54: passage
- 56: passage
- 58: diffusor
- 60: end body
- 62: end body
- 68: axial end
- 70: axial end
- 72: sealing element
- 76: sealing element
- 80: first fluid
- 82: second fluid
- 100: humidifier
- 102: inlet first fluid
- 104: outlet first fluid
- 106: inlet second fluid
- 108: outlet second fluid
- 110: housing
- 112: housing body
- 114: housing cover
- 116: housing wall
- 118: front side
- 120: potting material
- 122: diffusor
- 124: diffusor
- 126: locking bolt
- 128: ring channel
- 130: water separator
- 132: cyclone
- 134: diffusor
- 136: water separation chamber
- 138: water outlet
- 140: actuator

## Claims

1. A membrane element (10) for a humidifier (100), in particular for a fuel cell system, the membrane element (10) comprising:
a membrane media bellows (12) being zigzag-pleated and comprising a membrane media, the membrane media bellows (12) extending at least partially in a circumferential direction about a longitudinal axis (14), the membrane media bellows (12) further comprising pleats (16) extending essentially parallel to the longitudinal axis (14), and the membrane media bellows (12) further comprising inner pleat folds (20) at an inner circumference (18) and outer pleat folds (24) at an outer circumference (22);
a support body (40) comprising an outer wall (42) arranged at the inner circumference (18) of the membrane media bellows (12), the support body (40) further comprising a support body inlet (46) at one end (50) and a support body outlet (48) at an opposing end (52), the outer wall (42) of the support body (40) comprising fluid-permeable passages (54, 56) arranged circumferentially through the outer wall (42) at each end (50, 52) of the support body (40); and
a bypass valve (30) for selectively blocking and unblocking a fluid passage (38) through the support body (40).

2. The membrane element (10) according to claim 1, wherein the bypass valve (30) is arranged between the fluid-permeable passages (54, 56) of the support body (40).

3. The membrane element (10) according to claim 1 or 2, wherein the bypass valve (30) comprises a valve body (31) and a valve seat (32) arranged at an inside of the outer wall (42) surrounding an inner opening (36) of the support body (40).

4. The membrane element (10) according to claim 3, wherein the bypass valve (30) further comprises a spring element (33) for preloading the valve body (31), and
the support body (40) further comprises abutments (35) arranged at the support body (40) and supporting the spring element (33).

5. The membrane element (10) according to claim 3, wherein the valve body (31) is rotatable about an axis (39) transverse to the longitudinal axis (14).

6. The membrane element (10) according to claim 3 or 4, wherein the valve body (31) comprises a diffusor (58) pointing towards an intended upstream side of the support body (40) along the longitudinal axis (14).

7. The membrane element (10) according to any one of claims 1 to 6, further comprising a fluid-tight sleeve (34) and/or by a fluid-tight sealing material covering the outer circumference (22) of the membrane media bellows (12) at least partly along an axial extension of the membrane media bellows (12).

8. The membrane element (10) according to any one of claims 1 to 7, further comprising end bodies (60, 62) closing the membrane media bellows (12) at axial ends (68, 70) in a fluid-tight manner.

9. A humidifier (100) for a fuel cell system, the humidifier (100) comprising:
a housing (110) comprising:
an inlet (102) for a first fluid (80), in particular a supply air of the fuel cell system;
an inlet (106) for a second fluid (82), in particular an exhaust gas of the fuel cell system;
an outlet (104) for the first fluid (80); and
an outlet (108) for the second fluid (82);l
the membrane element (10) according to any one claims 1 to 8, the membrane element (10) being arranged inside the housing (110), at least parts of the outer circumference (22) of the membrane media bellows (12) being fluidly connected to the inlet (106) for the second fluid (82) and the outlet (108) for the second fluid (82), the support body inlet (46) being fluidly connected to the inlet (102) for the first fluid (80), and the support body outlet (48) being fluidly connected to the outlet (104) for the first fluid (80); and
an actuator (140) connected to the bypass valve (30) and for activating the bypass valve (30) depending on at least one operating parameter of the humidifier (100).

10. The humidifier (100) according to claim 9, further comprising a water separator (130) connected to the inlet (106) for the second fluid (82) and comprising a cyclone (132), a radial water separation chamber (136) and a water outlet (138).

11. The humidifier (100) according to claim 9 or 10, further comprising a circumferential sealing element (76) at the outer circumference (22) of the membrane media bellows (12) and for sealing at least part of the outer circumference (22) against a housing wall (116) of the housing (110).

12. The humidifier (100) according to any one of claims 9 to 11, further comprising potting material (120) arranged at a front side (118) inside the housing (110) and for sealing one axial end (70) of the membrane media bellows (12),
wherein the membrane media bellows (12) is connected to the housing (110) at the one axial end (70) by the potting material (120), whereas another axial end (68) of the membrane media bellows (12) is sealed by a housing cover (114) of the housing (110).

13. The humidifier (100) according to any one of claims 9 to 12, wherein any one or any combination of the inlet (106) for the second fluid (82) and the outlet (108) for the second fluid (82) comprises a diffusor (122, 124).
